(19) **Europäisches Patentamt / European Patent Office / Office européen des brevets**

(11) **EP 1 647 157 B1**

(12) **EUROPEAN PATENT SPECIFICATION**

(45) Date of publication and mention
of the grant of the patent:
**04.06.2014 Bulletin 2014/23**

(21) Application number: **04749093.3**

(22) Date of filing: **29.06.2004**

(51) Int Cl.:
**H04W 16/18** (2009.01)

(86) International application number:
**PCT/SE2004/001055**

(87) International publication number:
**WO 2005/004514 (13.01.2005 Gazette 2005/02)**

(54) **METHOD FOR DETERMINING THE GEOGRAPHICAL TRAFFIC LOAD IN A MOBILE TELECOMMUNICATION NETWORK.**

VERFAHREN ZUR BESTIMMUNG DER GEOGRAPHISCHEN VERKEHRSLAST IN EINEM MOBILTELEKOMMUNIKAITONSNETZ

PROCEDE PERMETTANT DE DETERMINER UNE CHARGE DE TRAFIC GEOGRAPHIQUE DANS UN RESEAU DE TELECOMMUNICATIONS MOBILES

(84) Designated Contracting States:
**AT BE BG CH CY CZ DE DK EE ES FI FR GB GR HU IE IT LI LU MC NL PL PT RO SE SI SK TR**
Designated Extension States:
**LT LV**

(30) Priority: **08.07.2003 SE 0302026**

(43) Date of publication of application:
**19.04.2006 Bulletin 2006/16**

(73) Proprietor: **TELIASONERA AB**
**106 63 Stockholm (SE)**

(72) Inventor: **SOMMER, Magnus**
**138 37 Älta (SE)**

(74) Representative: **Hopfgarten, Nils et al**
**Groth & Co. KB**
**P.O. Box 6107**
**102 32 Stockholm (SE)**

(56) References cited:
**US-A- 5 359 649      US-B1- 6 185 409**
**US-B1- 6 385 301      US-B1- 6 449 350**

- **STEUER J. AND JOBMANN K.: 'The use of mobile positioning supported traffic density measurements to assist load balancing methods based on adaptive cell sizing' THE 13TH IEEE INTERNATIONAL SYMPOSIUM ON PERSONAL, INDOOR AND MOBILE RADIO COMMUNICATION vol. 1, no. II-IV, 15 September 2002 - 18 September 2002, pages 339 - 343, XP010614243**

**Description**

TECHNICAL FIELD

The present invention relates to mobile telephone networks, and is aimed at determining traffic information regarding where in the telecommunication network the traffic is handled.

TECHNICAL PROBLEM

There is an interest in acquiring knowledge about where the geographical load in telecommunication networks, especially in mobile telecommunication networks, is, in order to make it possible to optimize the system. When knowledge about this has been acquired, available resources can be adjusted in a more optimal way than what is the case at present. In order to distribute the resources more efficiently than in the systems of today, it is desirable to get information regarding the traffic distribution within the geographical coverage areas of the different cells. By the development in the field of mobile telecommunication the problem is accelerating. At change from GSM to UMTS it is in the latter case of even more importance to get information about where the traffic is handled. The reason for this is that the UMTS radio interface, W-CDMA, has a strongly load-depending coverage. The development in the field of mobile telecommunication will accentuate this problem in the future. Consequently it is of greatest importance to find methods which automatically measure the traffic load with regard to geographical sub-areas covered by a cell, that is the coverage area of a base station.

PRIOR ART

In the systems of today the traffic handling is determined by means of statistical counters, which measure the traffic, expressed in Erlang, per cell. It consequently is at cell level that the present system provides information. Information consequently is provided regarding the total traffic-handling per cell, that is, which traffic that is handled within the coverage area of a base station.

The document "The use of mobile positioning supported traffic density measurements to assist load balancing methods based on adaptive cell sizing", by Steuer J. et al, The 13th IEEE International Symposium on Personal, Indoor and Mobile Radio Communication, 15-18 Sept. 2002, Volume: 1, relates to methods for balancing the spatial traffic load. After having defined the target function, the next step is the examination of the influence of one load balancing step on the introduced traffic parameters. As the initial values of $\lambda_{\text{New Cell}}$, $\lambda_{\text{HO}}$, $tm_{\text{cell}}$ and the average call duration $tm_{\text{call}}$ are measured, and therefore known, their change has to be estimated. For this purpose, the geographic effect of one load balancing step has to be described either analytically or determined with the coverage map of the TE-LCS module.

THE SOLUTION

The present invention relates to a method and device at mobile telephone network. The mobile telephone network includes terminals and base stations allocated functions for collecting and processing traffic information. The terminals transmit information to the base stations. Said information is stored in a database. The information is arranged according to sub-areas within a defined larger area. By means of a filter method, the incoming information is limited to comprise only a limited selection of the received information. By means of available information, the traffic load within the sub-areas after that is calculated, which sub-areas are admitted to be parts of the coverage area of said base stations. After that, the traffic load within the sub-areas is calculated, which information is utilized to optimize in the system available resources. The information which has been acquired regarding the traffic information is stored in a database.

At the filtering, at GSM, a filtering method is used including the steps:

> 1. Identify reported cells by means of ARFCN and BSIC.
> 2. Get/derive data about antenna gain, output power and cable loss from the position database.
> 3. Calculate the loss, L, according to

$$L = P_{out} + G_{ant} - (\text{RX-LEV-FULL-10}) ,$$

and

at UMTS a filtering method including the steps:

1. Identify reported cells by means of a scrambling code.
2. Get/derive data regarding antenna gain, CPICH, output power and cable loss from the position database.
3. Calculate the loss according to

$$L = (P_r)_{CPICH} - L_{cable} + G_{ant} - RSCP$$

Further, the following algorithm is used:

to calculate the position by means of the loss values, the positions $\vec{R_t}$ according to

$$\bar{r} = \frac{\sum_{every\ i} \bar{R_i} 10^{-\frac{L_i - A}{B}}}{\sum_{every\ i} 10^{-\frac{L_i - A}{B}}}$$

where

$\vec{R_t}$ = (X$_i$, Y$_i$) that is, the vector of the base station position
A = a first algorithm parameter
B = a second algorithm parameter
A and B can be obtained from Hata, Cost 231-Hata, or Cost 231 Walfisch-Ikegami-models.
L$_i$ = path loss for base station i

at determining the position of the mobile.

The produced information is arranged in a histogram.

ADVANTAGES

The invention provides a possibility to determine which areas within a cell that are more or less loaded. By this information, available resources can be distributed in one for the system more optimal way than with the resources of to-day. By this distribution the system consequently can be utilized in a, from a technical point of view, more optimal way which results in one from an economical point of view less costly network.

DESCRIPTION OF FIGURES

Fig. 1 shows the hierarchical structure of the invention.
Fig. 2 shows collecting of data for GSM which is done by means of an interface towards BC.

TERMS

| | |
|---|---|
| RNC | Radio Network Controller UMTS |
| BSC | Base Station Controller GSM |
| BTS | Base Transmission Station |
| MS | Mobile Station (Mobile unit) |
| UE | User Equipment (Mobile Radio unit) |
| GSM | Global System for Mobile communication |

UMTS       Universal Mobile Telecommunication System
W-CDMA     Wideband Code Division Multiple Access (Radio interface UMTS)
BSIC       Base Station Identity Code (GSM)
ARFCN      Absolute Radio Frequency Channel Number

PREFERRED EMBODIMENT

In the following, the invention is described on basis of the figures and the terms in them.

The present invention relates to a method for determining the geographical load in a mobile telecommunication network. In the known mobile telecommunication networks GSM and UMTS the fact that the terminals, when a connection is established, transmit measurement reports to the base station, RNC in UMTS, respective BSC in GSM, or by positioning/position finding for each terminal with methods which are earlier known, is utilized. The obtained information is transmitted to a database where the data information is processed. The collected information after that is processed and arranged in a measurement report where the measurement values are stored with regard to existing cells in the radio system.

A mobile radio system, 1, is divided into a number of cells, 2. Each cell, 2, is served by a base station, B, at which mobile stations, M, are moving within or between the cells, 2. The mobile stations, M, determine, according to some well known method, their positions. Examples of such methods are triangulation where a number of fixed base stations are utilized. In this case the geographical positions of the base stations are known. The distance between the mobile station, M, and respective base station, B, is determined by, for instance, measuring the time the signal need to travel between base station and mobile station. The calculation of the geographical position after that is executed by a calculation unit which is centrally located, for instance in the base radio network system, alternatively in the mobile unit. Other alternatives are to use positioning systems which are utilizing satellite navigation, for instance GPS. Also other systems can be utilized; the important thing is that the information can be identified and stored in an unequivocal/distinct way.

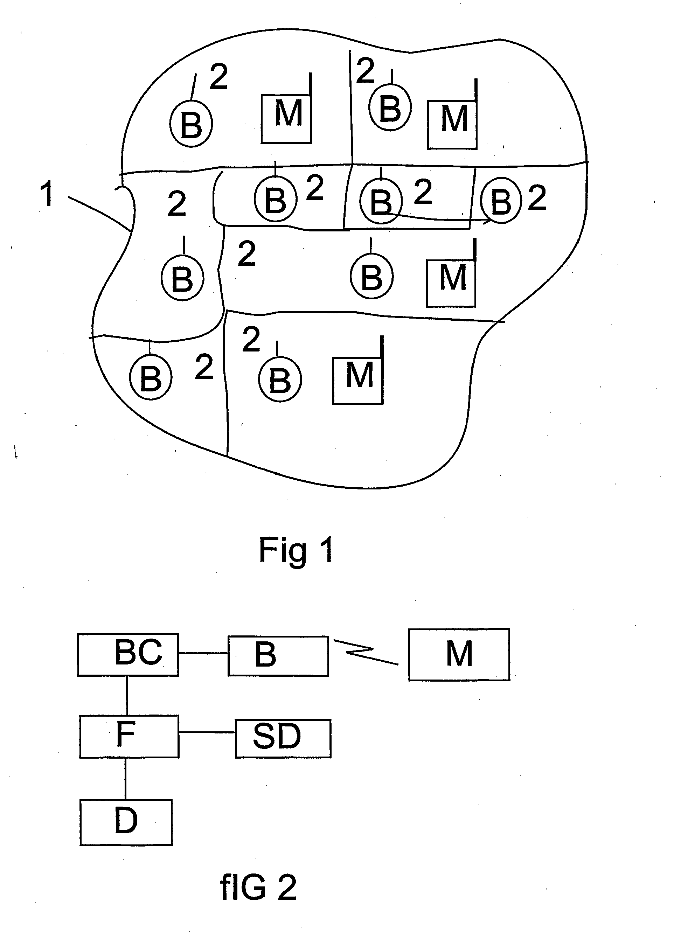

In a mobile telecommunication system according to Figure 2, the mobile stations, M, transmit their positions to the base station, B. The current information after that is transmitted to the base radio center, BC. The information is arranged in matrix form where for instance each line relates to a measurement report, and the columns correspond to the individual cells. In a database, SC, information regarding power, cable losses, antenna gain, frequency and BSIC or scrambling code for respective cell are stored. In a filter function, F, after that, there is a random selection of measurement values which shall be utilized at the calculation, at which the result is stored in a database D. At the filtering, different filter functions can be utilized, which are adjusted to the current mobile radio system. Thus can, as an example, be mentioned that at GSM, the filtering function will be as follows.

1. Identify reported cells by means of ARFCN and BSIC.
2. Get/derive data about antenna gain, output power and cable loss from the position database.
3. Calculate the loss, L, according to

$$L = P_{out} + G_{ant} - (\text{RX-LEV-FULL-10}) ,$$

and for UMTS:

1. Identify reported cells be means of scrambling code.
2. Get/derive data regarding antenna gain, CPICH, output power and cable loss from the position database.
3. Calculate the loss according to

$$L = (P_r)_{CPICH} - L_{cable} + G_{ant} - RSCP$$

For other systems corresponding adjustments are made at calculation of the losses. The calculated values after that are entered into the matrix of the database.

In order to find the position, the current area is divided into sub-areas. The size of the sub-areas are adjusted to the accuracy by which one wants to determine the traffic distribution. This can, for instance, be dependent on urban environment, countryside, topography etc. Each sub-area is characterized by a position $r=(x,y)$, in the center of the sub-area, and a number, n, which is given the start value 0. The area which is divided can be of any size, for instance a country, a town, the coverage area of a base station etc.

The traffic distribution after that is calculated according to the following method.

1. Take one measurement report at a time from the data base.

2. Calculate the position by means of the loss values, the positions $\vec{R_t}$ according to

$$\bar{r} = \frac{\displaystyle\sum_{every\ i} \bar{R}_i\, 10^{-\frac{L_i - A}{B}}}{\displaystyle\sum_{every\ i} 10^{-\frac{L_i - A}{B}}}$$

where

$\vec{R_t} = (X_i, _i)$ that is, the vector of the base station position

A = a first algorithm parameter

B = a second algorithm parameter

A and B can be obtained from Hata, Cost 231-Hata, or Cost 231 Walfisch-Ikegami-models.

$L_i$ = path loss for base station i.

3. Calculate the Euclidean distance to all screen dots, r, and select the screen dot which has the smallest distance, j.

4. Adjust the counter, n, of this screen dot upwards by 1.

5. When all lines in the table have been accomplished, divide the counters of all screen dots by the number of lines in the table.

A histogram in two dimensions in this way is obtained over the traffic.

The invention is not limited to the above described example of embodiment, or to the following patent claims, but may be subject to modifications within the frame of the idea of invention.

**Claims**

1.  Method for determining the geographical load in a mobile telecommunication network, including to terminals and base stations allocated functions, that the terminals transmit information to the base stations which information is stored in a database, that the information is arranged in sub-areas within a defined larger area, that the information is limited by means of a filtering method, and that the position is determined by the traffic distribution within the part areas being calculated, at which the available resources of the system are optimized, that the information regarding the traffic information is stored in a database, **characterized in that** the filtering method includes steps to calculate path losses (L), which are stored in the database, and that the position is determined by the traffic distribution, which traffic distribution is done according to the steps:

    - take a measurement report at a time from the database.

    - calculate the position by means of the loss values,

    the positions R according to $\bar{r} = \dfrac{\displaystyle\sum_{every\ i} \bar{R}_i\, 10^{-\frac{L_i - A}{B}}}{\displaystyle\sum_{every\ i} 10^{-\frac{L_i - A}{B}}}$

    where A is a first algorithm parameter, B is a second algorithm parameter, wherein A and B can be obtained from Hata, Cost 231-Hata, or Cost 231 Walfish-Ikegami-models, $L_i$ is path loss for base station I,

- calculate the Euclidian distance to all screen dots, r, and select the screen dot which has the smallest distance, j,
- adjust the counter, n, of this screen dot upwards by 1.
- when all lines in the table have been accomplished;
divide the counters of all screen dots by the number of lines in the table.

**2.** Method as claimed in patent claim 1,
**characterized in that** the filtering method for GSM includes the steps:

- identify reported cells by means of ARFCN and BSIC,
- get/derive data about antenna gain, output power and cable loss from the position database,
- calculate the path loss according to

$$L = P_{out} + G_{ant} - (RX\text{-}LEV\text{-}FULL\text{-}10).$$

**3.** Method as claimed in patent claim 1,
**characterized in that** the filtering method for UMTS includes the steps:

- identify reported cells by means of scrambling code,
- get/derive data regarding antenna gain, CPICH, output power and cable loss from the position database,
- calculate the path loss according to

$$L = (P_r)_{CPICH} - L_{cable} + G_{ant} - RSCP.$$

**4.** Method as claimed in any of the previous patent claims, **characterized in that** a histogram over the traffic is created.

**5.** Device for determining the geographical load in a mobile telecommunications network comprising means for performing the method steps defined in any one of Claims 1-4.

**Patentansprüche**

**1.** Verfahren zum Bestimmen der geographischen Last in einem Mobiltelekommunikationsnetz, das Funktionen enthält, die Endgeräten und Basisstationen zugewiesen sind, so dass die Endgeräte Informationen zu den Basisstationen senden, wobei die Informationen in einer Datenbank gespeichert sind, dass die Informationen innerhalb eines definierten größeren Bereichs in Teilbereichen angeordnet sind, dass die Informationen mit Hilfe eines Filterverfahrens eingeschränkt werden und dass die Position durch die Verkehrsverteilung innerhalb der Teilbereiche, die berechnet werden, an denen die verfügbaren Betriebsmittel des Systems optimiert sind, bestimmt wird, dass die Informationen, die die Verkehrsinformationen betreffen, in einer Datenbank gespeichert sind, **dadurch gekennzeichnet, dass** das Filterverfahren Schritte umfasst, Pfadverluste (L) zu berechnen, die in der Datenbank gespeichert sind, und dass die Position durch die Verkehrsverteilung bestimmt wird, welche Verkehrsverteilung gemäß den folgenden Schritten ausgeführt wird:

- Verwenden eines Messberichts zu einer Zeit aus der Datenbank,
- Berechnen der Position mit Hilfe der Verlustwerte der Positionen R gemäß

$$\overline{r} = \frac{\displaystyle\sum_{jeder\ i} \overline{R}_i\, 10^{-\frac{L_i - A}{B}}}{\displaystyle\sum_{jeder\ i} 10^{-\frac{L_i - A}{B}}}$$

wobei A ein erster Parameter des Algorithmus ist, B ein zweiter Parameter des Algorithmus ist, wobei A und B aus Hata-, Cost-231-Hata-, oder Cost-231-Walfish-Ikegami-Modellen erhalten werden können, und $L_i$ ein Pfadverlust für die Basisstation I ist,

- Berechnen des Euklidischen Abstands zu allen Rasterpunkten, r, und Auswählen des Rasterpunkts, der den kleinsten Abstand, j, aufweist.
- Anpassen des Zählers, n, des Rasterpunkts um 1 nach oben,
- wenn alle Zeilen in der Tabelle fertiggestellt worden sind;
Teilen der Zähler aller Rasterpunkte durch die Anzahl der Zeilen in der Tabelle.

2.  Verfahren nach Anspruch 1,
    **dadurch gekennzeichnet, dass** das Filterverfahren für GSM die folgenden Schritte enthält:

    - Identifizieren berichteter Zellen mit Hilfe von ARFCN und BSIC,
    - Erhalten/Ableiten von Daten über Antennengewinn, Ausgangsleistung und Kabelverlust aus der Positionsdatenbank,
    - Berechnen des Pfadverlusts gemäß

$$L = P_{aus} + G_{ant} - (RX\text{-}LEV\text{-}FULL\text{-}10).$$

3.  Verfahren nach Anspruch 1,
    **dadurch gekennzeichnet, dass** das Filterverfahren für UMTS die folgenden Schritte enthält:

    - Identifizieren berichteter Zellen mit Hilfe von Verwürfelungscode,
    - Erhalten/Ableiten von Daten, die Antennengewinn, CPICH, Ausgangsleistung und Kabelverlust betreffen, aus der Positionsdatenbank,
    - Berechnen des Pfadverlusts gemäß

$$L = (P_r)_{CPICH} - L_{kabel} + G_{ant} - RSCP$$

4.  Verfahren nach einem der vorhergehenden Ansprüche, **dadurch gekennzeichnet, dass** ein Histogramm über den Verkehr erzeugt wird.

5.  Vorrichtung zum Bestimmen der geographischen Last in einem Mobiltelekommunikationsnetz, die Mittel zum Ausführen der Verfahrensschritte, die in einem der Ansprüche 1-4 definiert sind, umfasst.

**Revendications**

1.  Procédé de détermination de la charge géographique dans un réseau de télécommunications mobiles, comprenant des fonctions attribuées à des terminaux et stations de base, les terminaux transmettant des informations aux stations de base, lesquelles informations étant stockées dans une base de données, les informations étant agencées dans des sous-zones d'une zone définie plus étendue, les informations étant limitées par un procédé de filtrage, et la position étant déterminée par la distribution de trafic dans les zones partielles calculées, auxquelles les ressources disponibles du système sont optimisées, les informations concernant les informations de trafic étant stockées dans une base de données, **caractérisé en ce que** le procédé de filtrage comporte des étapes pour calculer des pertes de chemin (L), lesquelles sont stockées dans la base de données, et la position étant déterminée par la distribution de trafic, laquelle distribution de trafic étant effectuée en fonction des étapes consistant à :

- effectuer un rapport de mesure à un certain temps à partir de la base de données ;
- calculer la position au moyen des valeurs de perte, les positions R en fonction de

$$\bar{r} = \frac{\sum_{chaque\ i} \bar{R}_i 10^{-\frac{L_i - A}{B}}}{\sum_{chaque\ i} 10^{-\frac{L_i - A}{B}}}$$

où A est un premier paramètre d'algorithme, B est un second paramètre d'algorithme, où A et B peuvent être obtenus à partir de modèles Hata, Cost 231-Hata ou Cost 231 Walfish-Ikegami, $L_i$ est la perte de trajet de la station de base I,

- calculer la distance euclidienne jusqu'à tous les points d'écran, r, et sélectionner le point d'écran qui a la plus petite distance, j,
- augmenter le compteur, n, de ce point d'écran de 1,
- quand toutes les lignes dans la table ont été traitées ;
diviser les compteurs de tous les points d'écran par le nombre de lignes dans la table.

2. Procédé selon la revendication 1, **caractérisé en ce que** le procédé de filtrage pour GSM comporte les étapes consistant à :

- identifier les cellules signalées au moyen de ARFCN et BSIC ;
- obtenir/dériver des données de gain d'antenne, puissance de sortie et perte de câble depuis la base de données de positions ;
- calculer la perte de chemin en fonction de

$$L = P_{sortie} + G_{ant} - (RX\text{-}LEV\text{-}FULL\text{-}10).$$

3. Procédé selon la revendication 1, **caractérisé en ce que** le procédé de filtrage pour UMTS comporte les étapes consistant à :

- identifier les cellules signalées au moyen d'un code de brouillage,
- obtenir/dériver des données de gain d'antenne, CPICH, puissance de sortie et perte de câble depuis la base de données de positions ;
- calculer la perte de chemin en fonction de

$$L = (P_r)_{CPICH} - L_{câble} + G_{ant} - RSCP.$$

4. Procédé selon l'une quelconque des revendications précédentes, **caractérisé en ce qu'**un histogramme de trafic est créé.

5. Dispositif de détermination de la charge géographique dans un réseau de télécommunications mobiles comprenant des moyens pour exécuter les étapes de procédé définies dans l'une quelconque des revendications 1 à 4.

Fig 1

fIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEUER J. et al.** The use of mobile positioning supported traffic density measurements to assist load balancing methods based on adaptive cell sizing. *13th IEEE International Symposium on Personal, Indoor and Mobile Radio Communication,* 15 September 2002, vol. 1